# EUROPÄISCHE PATENTANMELDUNG

(11) **EP 0 554 738 A1**
(43) Veröffentlichungstag der Anmeldung: **11.08.1993**
(21) Anmeldenummer: 93101041.7
(22) Anmeldetag: 23.01.1993
(51) Int. Cl.: B23B 31/00

(54) **Fräser-Aufnahme und Spannkonus für Werkzeugmaschinen**

(30) Priorität: 30.01.1992 DE 9201112 U
(71) Anmelder: Deitert, Heinz, D-33442 Herzebrock-Clarholz (DE)
(72) Erfinder: Deitert, Heinz, D-33442 Herzebrock-Clarholz (DE)
(74) Vertreter: Meldau, Gustav, Dipl.-Ing.

(57) **Zusammenfassung**

Eine Fräser-Aufnahme und Spannkonus für Werkzeugmaschinen, insbesondere für Fräsmaschinen ist so weitergebildet, daß eine Dezentrierung mit größerer Sicherheit vermieden wird und auch Auslenkungen aufgrund hoher Kräfte, die auf eine weit vorstehende Fräser-Aufnahme einwirken, sich nicht nachteilig auswirken. Dazu ist der Spannkonus (15) zum Einsetzen in die Maschinenspindel, mit einer axialen durchgehenden Bohrung (16) versehen, die zum dicken Ende des Konus (15) mit einem Absatz (18) erweitert ist zum formschlüssigen Einsatz des Endes (6) der Fräser-Aufnahme (1), das mit einem zentrischen Innengewinde (8) versehen ist, mit einem Absatz in einen Durchmesser übergeht, der dem Enddurchmesser des Spannkonus (15) etwa entspricht, unter Zwischenlage eines federelastischen Materials (11) zwischen den beiden gegeneinanderliegenden Ringflächen, wobei ein Schraubbolzen (19) mit seinem Gewinde (21) in das Innengewinde (8) der Fräseraufnahme (1) eingreift, sich durch die Bohrung (16) im Spannkonus (15) erstreckt und mit seinem Kopf (22-25) auf dem schmalen Ende des Konus (15) abgestützt ist.

## Beschreibung

Die Erfindung bezieht sich auf eine Fräser-Aufnahme und Spannkonus für Werkzeugmaschinen, insbesondere Fräsmaschinen.

Bei Werkzeugmaschinen, insbesondere Fräsmaschinen, wird in der Spindel der Maschine zunächst ein Spannkonus angebracht. Dabei spielt es für die Erfindung keine Rolle, um welche Bauart von Spannkonus es sich handelt, denn es gibt dafür verschiedene DIN-Vorschriften. An den Spannkonus schließt die Fräser-Aufnahme an, an deren freien (hier unteren) Ende die eigentlichen Fräswerkzeuge, vorzugsweise in Form von Hartmetallschneidplatten, befestigt werden. Der Spannkonus wird mittels eines Schraubbolzens, der von dem dünneren Ende des Spannkonus her in die Mittenbohrung eingesetzt ist, in ein in dieser Mittenbohrung eingeformtes Innengewinde in seinen konischen Sitz in der Spindel hineingezogen und dort gehalten.

Insbesondere in den Fällen, in denen die Fräser-Aufnahme besonders lang ausgebildet ist, um bei Fräsarbeiten tief in Werkstücke eintauchen zu können, wirken erhebliche Kräfte auf diese Fräser-Aufnahme. Andererseits ist bei sehr lang ausgebildeten Fräser-Aufnahmen die Gefahr, daß auch eine nur sehr geringe Dezentrierung am äußersten Ende der Fräser-Aufnahme aufgrund eines nicht vollständig exakten Sitzes des Spannkonus in der Spindel auftritt, in der Praxis wiederholt zu beobachten. Die vorgenannten starken Kräfte, die am Ende einer langen Fräser-Aufnahme einwirken, wirken gleichfalls dezentrierend.

Die Erfindung hat sich die Aufgabe gestellt, diese Nachteile zu vermeiden und insbesondere für lange Fräser-Aufnahmen eine derartige Befestigung mit dem Spannkonus zu erreichen, daß eine Dezentrierung mit größerer Sicherheit vermieden wird und auch Auslenkungen aufgrund hoher Kräfte, die auf eine weit vorstehende Fräser-Aufnahme einwirken, sich nicht nachteilig auswirken.

Zur Lösung dieser Aufgabe ist eine Fräseraufnahme der gattungsgemäßen Art dadurch gekennzeichnet, daß der Spannkonus zum Einsetzen in die Maschinenspindel mit einer axialen durchgehenden Bohrung versehen ist, die zum dicken Ende des Konus mit einem Absatz erweitert ist, zum formschlüssigen Einsatz des Endes der Fräser-Aufnahme, das mit einem zentrischen Innengewinde versehen ist, mit einem Absatz in einen Durchmesser übergeht, der dem Enddurchmesser des Spannkonus etwa entspricht, unter Zwischenlage eines federelastischen Materials zwischen den beiden gegeneinanderliegenden Ringflächen, wobei ein Schraubbolzen mit seinem Gewinde in das Innengewinde der Fräser-Aufnahme eingreift, sich durch die Bohrung im Spannkonus erstreckt und mit seinem Kopf auf dem schmalen Ende des Konus abgestützt ist.

Durch diese Anordnung nach der Erfindung wird einerseits die Fräser-Aufnahme mit hoher Kraft gegen den Spannkonus angezogen, während andererseits der Spannkonus ebenfalls mit hoher Kraft in seinen Sitz in der Spindel gezogen wird. Dabei sind zwischen dem Spannkonus und der Fräser-Aufnahme Zwischenlagen aus federelastischem Material angeordnet, die die Kraft, mit der die Fräser-Aufnahme angezogen wird auf den Spannkonus überträgt, ohne daß dabei irgendwelche Verkantungen und dabei Dezentrierungen auftreten können, weil durch diese elastische Zwischenlage die zu übertragende Kraft gleichmäßig über die gesamte Anlagefläche verteilt wird. Gleiches gilt auch für eine auslenkende Belastung am Ende der Fräser-Aufnahme. Demnach wird der Spannkonus immer mit gleichmäßiger starker Kraft in seinem Sitz in der Spindel gehalten, während tatsächlich die Fräser-Aufnahme unmittelbar durch den Schraubbolzen angezogen wird.

Nach einer Weiterbildung der Erfindung ist diese dadurch gekennzeichnet, daß an dem Absatz, bzw. fluchtend mit dem Absatz der Fräser-Aufnahme, ein nach außen stehender Flansch angeformt ist, mit Durchbrüchen für Befestigungsschrauben.

Hier kann die Fräser-Aufnahme unmittelbar an der Endfläche der Spindel fest mit dieser verschraubt werden. Es hat den Vorteil, daß zunächst die Fräser-Aufnahme durch die feste Verbindung mit dem Spannkonus in der erforderlichen Weise zentriert ist, so daß beim Ansetzen weiterer Befestigungsschrauben an dem Flansch der Fräser-Aufnahme eine Zentrierung nicht mehr erforderlich, da bereits vorhanden ist. Die Befestigungsschrauben an dem Flansch der Fräser-Aufnahme greifen mit einem größeren Hebelarm an, so daß auch bei größerer Länge der Fräser-Aufnahme die dann einwirkenden Kräfte über größere Hebelarme aufgenommen werden, denn die Aufnahme dieser Kräfte über den zentralen Schraubbolzen ist bei den weiten Ausladungen der Fräser-Aufnahmen und den hohen Beanspruchungen, wie sie heute bei Werkzeugmaschinen üblich und möglich sind, kaum noch zu beherrschen.

Nach einer weiteren vorteilhaften Ausführungsform der Erfindung ist an dem Absatz der Fräser-Aufnahme und/oder der gegenüberliegenden Endfläche des Spannkonus eine Nut zur teilweisen Aufnahme der Zwischenlage aus federelastischem Material angeordnet.

Durch diese Anordnung wird das federelastische Material praktisch vollständig an allen Seiten umgeben und in einem Kanal oder Käfig gehalten, so daß es auch bei hoher Beanspruchung unter hohen Drücken nicht seitlich ausweichen kann, sondern ausschließlich zwischen den gegeneinanderliegenden Flächen und damit stützend und kraftübertragend wirkt.

Die Erfindung wird nachstehend anhand eines Ausführungsbeispiels mit Bezug auf die Zeichnungen näher erläutert. In den Zeichnungen zeigen:

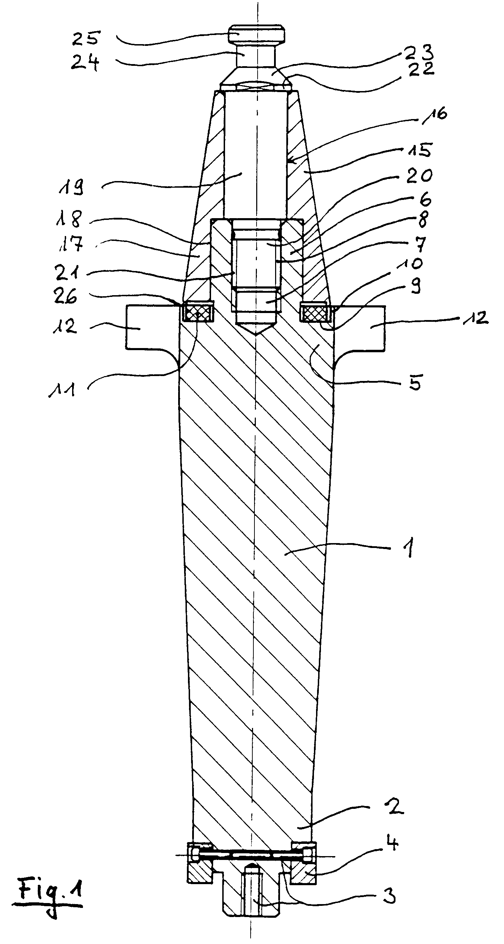

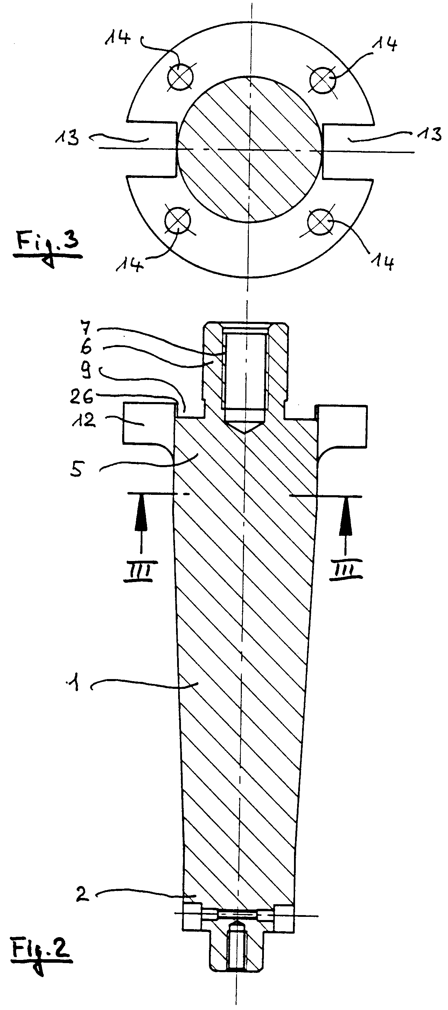

- Fig. 1:: Fräser-Aufnahme und Spannkonus in gesamtem axialen Schnitt;
- Fig. 2:: Fräser-Aufnahme im axialen Schnitt;
- Fig. 3:: Einen Schnitt entlang der Linie III-III der Figur 2;
- Fig. 4:: Den Spannkonus, eine Hälfte axial geschnitten;

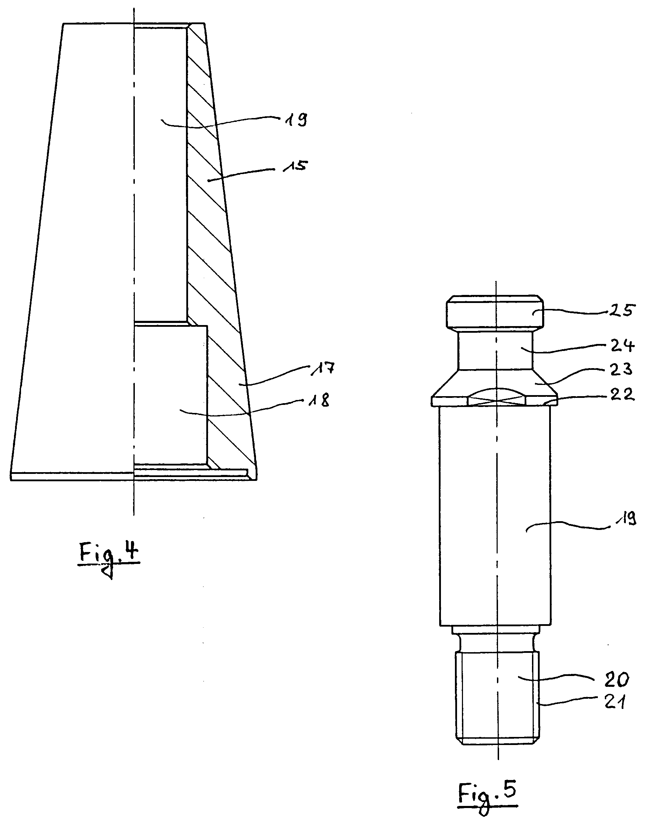

- Fig. 5:: Den Schraubbolzen in Seitenansicht.

Die Fräser-Aufnahme 1 besteht aus einem rundgedrehten Teil, das zu seinem Ende 2 hin konisch zulaufend ausgebildet sein kann. An diesem freien Ende 2 sind die Werkzeugaufnahmen 3 für verschiedene Werkzeuge ausgebildet. Dabei kann es sich um Schneidplatten 4 handeln.

An dem einzuspannenden Ende 5 ist die Fräseraufnahme mit einem Einsatz 6 versehen, der zylindrisch ausgebildet ist und einen geringeren Durchmesser hat, als das Ende 5 der Fräser-Aufnahme. Dieser Einsatz 6 ist mit einer zentrischen Bohrung 7 mit Innengewinde 8 versehen. Außerhalb dieses Einsatzes befindet sich, da der Einsatz 6 einen geringeren Durchmesser als das Ende 5 der Fräser-Aufnahme hat, eine Ringfläche 9 die vorteilhaft als eingesenkte Nut ausgebildet ist, wobei der Außenrand 10 der Nut nach oben steht, bis in etwa die Höhe eines in die Nut eingesetzten Ringes 11 aus federelastischem Material. Außerhalb dieser Ausbildung und mit der durch die Ringfläche gebildeten Stirnseite des Fräsereinsatzes fluchtend, ist ein nach außen stehender Flansch 12 angeformt, in den Einformungen 13 ausgenommen sein können und in den weiterhin Durchgangslöcher 14 für Befestigungs- und Verbindungsschrauben angeordnet sind.

Der Spannkonus 15 zum Einsatz in die Spindel der Werkzeugmaschine ist an seiner Außenseite konisch ausgebildet und mit einer axialen durchgehenden Bohrung 16 versehen, die an dem dicken Ende 17 des Konus 15 mit einer Erweiterung 18 versehen ist, in die der Einsatz 6 formschlüssig einpaßt, der an dem oberen Ende der Fräser-Aufnahme 5 angeformt ist.
Ein Schraubbolzen 19 ist in die Durchgangsbohrung 16 des Konus 15 mit seinem glatten Schaft eingesetzt und dringt mit seinem im Durchmesser etwas verringerten Ende 20, das mit einem Außengewinde 21 versehen ist, in die zentrische Bohrung 7 in dem Ansatz 6 an der Fräser-Aufnahme ein und ist dort in das Innengewinde 8 eingeschraubt. An seinem freien Ende hat der Schraubbolzen 19 einen überstehenden Bund 22 mit einer darüberliegenden keglig sich verjüngenden Einschnürung 23, die in einen zylindrischen Teil 24 übergeht. Darüber befindet sich ein erweiterter Kopf 25. Hiermit sitzt der Schraubbolzen in der Spindel der Werkzeugmaschine drehbar fest und kann nach Einsetzen des Konus mit einem entsprechenden Werkzeug gedreht werden, um mit seinem Gewinde 21 die Fräser-Aufnahme 1 gegen das dicke Ende des Konus 15 anzuziehen, wobei diese Anzugskraft durch das dazwischenliegende federelastische Material 11 auf die freie Stirnseite des Konus übertragen wird. Auch diese freie Stirnseite des Konus ist zweckmäßig mit einer Nute 26 ausgebildet bzw. ist vorteilhaft an der ringförmigen Stirnfläche des Konus 15 an seinem dicken Ende 17 eine äußere Ringwandung 26 angeordnet, deren Außendurchmesser etwas geringer ist als der Innendurchmesser der Außenwandung der Nut 10 in der Fräser-Aufnahme 1, so daß diese beiden Ringwandungen ineinandergleiten können, so daß der innerhalb liegende Ring aus federelastischem Material 11 beim Gegeneinanderziehen der beiden Teile 1 und 15 sicher eingesperrt ist.

Die derart mit der Spindel der Werkzeugmaschine fest und zentrisch verbundene Fräser-Aufnahme kann zusätzlich an der Spindel befestigt werden, durch Schrauben die durch die Durchgangslöcher 14 am obersten Ende der Fräser-Aufnahme hindurchgesetzt und in entsprechende Schraublöcher an der Stirnfläche der Maschinenspindel eingeschraubt sind. Durch das Anziehen dieser Schrauben wird der Sitz des Konus 15 in der Spindel in keiner Weise beeinflußt, verkantet oder beeinträchtigt, denn es liegt ja das federelastische Material 11 dazwischen, das jede Druckbeanspruchung auf den Konus 15 gleichmäßig auf dessen Stirnfläche verteilt.

Aus dem vorstehenden ist auch zu erkennen, daß jeder beliebig geformte Konus 15 hier verwendbar ist, da durch eine andere Formgebung des Konus der allgemeine Zusammenhang und die entsprechende Kraftüberleitung in keiner Weise beeinflußt wird.

Durch die zusätzlichen durch den Flansch 12 an der Fräser-Aufnahme hindurchgehenden Befestigungsschrauben wird die Belastbarkeit der Fräser-Aufnahme 1 noch wesentlich verbessert und erhöht. Es lassen sich auch ggfs. noch Beilagen in Form von Unterlagen oder Ringen aus dünnen Materialien zwischen die Anlagefläche an dem Flansch 12 und der Stirnfläche der Spindel einlegen, beispielsweise um einen besseren Rundlauf einstellen zu können.

## Patentansprüche

1. Fräser-Aufnahme und Spannkonus für Werkzeugmaschinen, insbesondere für Fräsmaschinen, **dadurch gekennzeichnet**, daß der Spannkonus (15) zum Einsetzen in die Maschinenspindel, mit einer axialen durchgehenden Bohrung (16), die zum dicken Ende des Konus (15) mit einem Absatz (18) erweitert ist zum formschlüssigen Einsatz des Endes (6) der Fräser-Aufnahme (1), das mit einem zentrischen Innengewinde (8) versehen ist, mit einem Absatz in einen Durchmesser übergeht, der dem Enddurchmesser des Spannkonus (15) etwa entspricht, unter Zwischenlage eines federelastischen Materials (11) zwischen den beiden gegeneinanderliegenden Ringflächen, wobei ein Schraubbolzen (19) mit seinem Gewinde (21) in das Innengewinde (8) der Fräseraufnahme (1) eingreift, sich durch die Bohrung (16) im Spannkonus (15) erstreckt und mit seinem Kopf (22-25) auf dem schmalen Ende des Konus (15) abgestützt ist.

2. Fräser-Aufnahme und Spannkonus für Werkzeugmaschinen, **dadurch gekennzeichnet,** daß an dem Absatz, bzw. fluchtend mit dem Absatz der Fräser-Aufnahme (1) ein nach außen stehender Flansch (12) angeformt ist mit Durchgangslöchern (14) für Befestigungsschrauben.

3. Fräser-Aufnahme und Spannkonus für Werkzeugmaschinen, **dadurch gekennzeichnet**, daß an dem Absatz der Fräser-Aufnahme (1) und/oder der gegenüberliegenden Endfläche des Spannkonus (15) eine Nut (9 u. 26) zur teilweisen Aufnahme der Zwischenlage aus federelastischem Material (11) angeordnet ist.
